# EUROPEAN PATENT APPLICATION

(11) **EP 3 016 434 A1**
(43) Date of publication of application: **04.05.2016**
(21) Application number: 14306736.1
(22) Date of filing: 30.10.2014
(51) Int. Cl.: H04W 28/26, H04W 64/00

(54) **Apparatuses, mobile transceiver, base station, methods and computer programs for providing information related to a predicted channel state of a mobile transceiver**

(71) Applicant: ALCATEL LUCENT, 92100 Boulogne-Billancourt (FR)
(72) Inventor: Valentin, Stefan, 70435 Stuttgart (DE)
(74) Representative: 2SPL Patentanwälte PartG mbB

(57) **Abstract**

An apparatus (10), a mobile transceiver (100), a base station transceiver (200), an apparatus (20), methods and computer programs for providing information related to a predicted channel state of a mobile transceiver (100) of a mobile communication system (300). The apparatus comprises a location module (12) to obtain information related to a location of the mobile transceiver (100) and a control module (14) to determine information related to a predicted trajectory of the mobile transceiver (100) based on the information related to the location of the mobile transceiver (100), and to provide the information related to the predicted channel state based on the information related to the predicted trajectory of the mobile transceiver (100).

## Description

### Technical Field

Embodiments relate to apparatuses, a mobile transceiver, a base station, methods and computer programs for providing information related to a predicted channel state of a mobile transceiver, particularly, but not exclusively, based on information related to a predicted trajectory of the mobile transceiver.

### Background

This section introduces aspects that may be helpful in facilitating a better understanding of the invention(s). Accordingly, the statements of this section are to be read in this light and are not to be understood as admissions about what is in the prior art or what is not in the prior art.

In mobile communication systems, the quality and transmission speed of the network depends on many factors, for example the distance of the mobile device to the base station, obstacles blocking the line of sight to a base station, the amount of data currently requested by other mobile devices, or the technology and protocols used. As the transmitted data rate may quickly vary from a few kilobits per second or less to hundreds of megabits per second, operators of mobile communication systems and developers of content-requesting applications may have an incentive to predict a future channel state, for example to determine when to perform a handover procedure, to adjust scheduling mechanisms, or to adapt the quality or buffering of requested content.

To determine the location of a mobile transceiver in a mobile communication system, a number of methods might be used: The mobile transceiver itself might determine its location through, for example, the Global Positioning System (GPS), using a database of base station locations of a Wireless Local Area Network (WLAN), or through the triangulation or trilateration of base stations of one of the mobile communication systems the mobile transceiver operates in. Yet base stations might also determine the location of the mobile transceiver, e.g. the by triangulating or trilaterating the location of the transceiver from multiple (or even single) base stations.

More information can be found in:
S. Sadr, S. Valentin, "Anticipatory Buffer Control and Resource Allocation for Wireless Video Streaming", CoRR, abs/1304.3056, 2013;
H. Ji, A. Xu, X. Sui, and L. Li, "The applied research of Kalman in the dynamic travel time prediction," in Proceedings of International Conference on Geoinformatics, Beijing, China, June 2010;
X. Zhang and J. A. Rice, "Short-term travel time prediction," Transportation Research Part C: Emerging Technologies, vol. 11, no. 3-4, pages 187-210, June-August 2003; and
N. Barman and S. Valentin, "Wireless Link Quality Prediction Using Street and Coverage Maps," in Proceedings KuVS Workshop on Anticipatory Networks, September 2014.

### Summary of illustrative Embodiments

Some simplifications may be made in the following summary, which is intended to highlight and introduce some aspects of the various exemplary embodiments, but such simplifications are not intended to limit the scope of the invention(s). Detailed descriptions of a preferred exemplary embodiment adequate to allow those of ordinary skill in the art to make and use the inventive concepts will follow in later sections.

Various embodiments provide apparatuses, a mobile transceiver, a base station, methods and computer programs for providing information related to a predicted channel state of a mobile transceiver. As both providers of content and producers of content clients on mobile transceivers strife to provide content in the best possible configuration, both parties are looking for ways of predicting a future channel state, so content clients and content service can adapt their transmissions to account for changes in the transmission capacity.

Embodiments provide an apparatus for providing information related to a predicted channel state of a mobile transceiver of a mobile communication system. The apparatus comprises a location module to obtain information related to a location of the mobile transceiver. The apparatus further comprises a control module to determine information related to a predicted trajectory of the mobile transceiver based on the information related to the location of the mobile transceiver, and to provide the information related to the predicted channel state based on the information related to the predicted trajectory of the mobile transceiver. By using the information related to a predicted channel state, content delivery may be adjusted to the predicted channel state to, for example, avoid or reduce the number of stalls during content delivery.

In some embodiments, the location module may be configured to provide the information related to the location of the mobile transceiver based on information related to Global Positioning System (GPS) coordinates of the mobile transceiver. In some embodiments, the mobile communication system may further comprise one or more base station transceivers, and the location module may be configured to provide the information related to the location of the mobile transceiver based on information related to a relative distance between the mobile transceiver and the one or more base station transceivers. Using information related to GPS coordinates, embodiments may provide a relatively precise location of the mobile transceiver. Using the distance between the one or more base station transceivers and the mobile transceiver, the location of the mobile transceiver might be determined without an active collaboration of the mobile transceiver.

In various embodiments, the information related to the relative distance between the mobile transceiver and the one or more base station transceivers may be based on information related to Received Signal Strength Indications (RSSI) of one or more signals of the one or more base station transceivers at the mobile transceiver. Using the RSSI, which might be considered a well-understood metric, a reliable localization of the mobile transceiver may be possible.

The information related to the location of the mobile transceiver may, in embodiments, also be based on a triangulation of the position of the mobile transceiver based on the information related to a relative distance between the mobile transceiver and at least three base station transceivers. Using at least three base station transceivers to triangulate the location of the mobile transceiver, the position of the mobile transceiver might be determined reliably.

In some embodiments, the one or more base station transceivers may correspond to macro cell base station transceivers and/or small cell base station transceivers. Using both small cell base station transceivers and macro cell base station transceivers, triangulation might be able to use a wide range of deployed base station transceivers, which may lead to fine-grained results.

In various embodiments, the predicted trajectory of the mobile transceiver may be based on information related to a position of the mobile transceiver relative to a fixed traffic object. In some embodiments the predicted trajectory of the mobile transceiver may be based on a limited set of possible trajectories. Using a position relative to a fixed traffic object, operators may be able to determine a limited set of possible trajectories, for which a data base of possible future channel states might be determined.

In various embodiments, the information related to the predicted channel state at the mobile transceiver may be based on information related to a mapping between a location and/or a predicted trajectory and a predicted channel state. Using information from a map, which might comprise information related to a possible shadowing of radio signals, distances to base station transceivers or average network load, a future channel state, may, in embodiments, be determined based on a location and/or a predicted trajectory.

In some embodiments, the location module may be configured to obtain the information related to the location of the one or more mobile transceivers from a base station transceiver. In various embodiments, the information related to the location of the one or more mobile transceivers may comprise information related to a former trajectory of the one or more mobile transceivers. Using information related to a former trajectory and/or a current location, a future trajectory might be predicted.

Embodiments further provide a mobile transceiver comprising the apparatus. Determining the information related to a predicted channel state locally at the mobile transceiver, the mobile transceiver might use the information to adjust the selection and requesting of content independently from the operator of the mobile communication system.

Embodiments further provide a base station transceiver comprising the apparatus. Comprising the apparatus in a base station, the base station might determine a more efficient point in time and target base station for performing a handover of the mobile transceiver.

Embodiments further provide an apparatus for a base station transceiver of a mobile communication system comprising one or more mobile transceivers. The apparatus comprises an input to obtain information related to a location of the one or more mobile transceivers and an output to provide information related to a trajectory of the one or more mobile transceivers. The apparatus further comprises a control module to determine the information related to the trajectory of the one or more mobile transceivers, based on the information related to the location of the one or more mobile transceivers. The apparatus may provide the information related to a trajectory of a mobile transceiver, which might be used to determine a predicted channel state of the mobile transceiver.

In some embodiments, the mobile communication system may further comprise another base station. The control module may further be configured to provide the information to the other base station transceiver using the output. The control module may further be configured to obtain information related to a prior trajectory from the other base station transceiver using the input. By communicating with other base stations, a more precise trajectory of the mobile transceiver might be determined.

Embodiments further provide a method for providing information related to a predicted channel state of a mobile transceiver of a mobile communication system. The method comprises obtaining information related to a location of the mobile transceiver. The method further comprises determining information related to a predicted trajectory of the mobile transceiver based on the information related to the location of the mobile transceiver. The method further comprises providing the information related to the predicted channel state based on the information related to the predicted trajectory of the mobile transceiver.

Embodiments further provide a method for a base station transceiver of a mobile communication system comprising one or more mobile transceivers. The method comprises obtaining information related to a location of the one or more mobile transceiver and providing information related to a trajectory of the one or more mobile transceivers. The method further comprises determining the information related to the trajectory of the one or more mobile transceivers, based on the information related to the location of the one or more mobile transceivers.

Embodiments further provide a computer program having a program code for performing at least one of the above methods, when the computer program is executed on a computer, a processor, or a programmable hardware component. A further embodiment is a computer readable storage medium storing instructions which, when executed by a computer, processor, or programmable hardware component, cause the computer to implement one of the methods described herein.

### Brief description of the figures

Some other features or aspects will be described using the following non-limiting embodiments of apparatuses or methods or computer programs or computer program products by way of example only, and with reference to the accompanying figures, in which:
Fig. 1 illustrates a block diagram of an embodiment of an apparatus for providing information related to a predicted channel state of a mobile transceiver of a mobile communication system;
Fig. 2 illustrates a bar chart of a path loss estimation error of a system;
Fig. 3 shows a diagram of an embodiment comprising one or more small cell base stations, one or more macro cell base stations and a mobile transceiver;
Fig. 4 illustrates a block diagram of an embodiment of an apparatus for providing information related to a predicted channel state of a mobile transceiver of a mobile communication system, the mobile communication system further comprising one or more base station transceivers.
Fig. 5 illustrates a sequence chart of an embodiment one or more small cell base stations, one or more macro cell base stations and a user equipment;
Fig. 6 illustrates a block diagram of an embodiment of a mobile transceiver comprising the apparatus for providing information related to a predicted channel state of a mobile transceiver of a mobile communication system;
Fig. 7 illustrates a block diagram of an embodiment of a base station transceiver comprising an apparatus for providing information related to a predicted channel state of a mobile transceiver of a mobile communication system;
Fig. 8 illustrates a block diagram of an embodiment of an apparatus for a base station transceiver of a mobile communication system comprising one or more mobile transceivers;
Fig. 9 illustrates a flow chart of an embodiment of a method for providing information related to a predicted channel state of a mobile transceiver of a mobile communication system; and
Fig. 10 illustrates a flow chart of an embodiment of a method for a base station transceiver of a mobile communication system comprising one or more mobile transceivers.

### Description of Embodiments

Various example embodiments will now be described more fully with reference to the accompanying drawings in which some example embodiments are illustrated. In the figures, the thicknesses of lines, layers or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Resource allocation for moving users may be considered challenging, since the characteristics of the wireless link may vary both in time and space. As the wireless user moves, the quality of the channel, i.e., received signal strength indicator (RSSI) may change with respect to the current location of the user. Once the user moves to a poor coverage area, the network may have to spend more resources, in terms of transmit time, bandwidth or transmit power to meet the Quality of Service (QoS) requirements of the user. In embodiments, being aware of the user trajectory may enable the network to anticipate the channel quality in advance and to adjust the resource allocation with respect to upcoming channel states. For example, anticipating that a video streaming user will move to a poor coverage area, e.g. a tunnel, the network might, in embodiments, allocate sufficient resources to allow the user to fill its local video playout buffer in advance. Once the user enters the tunnel, it might have sufficient data buffered to assure a smooth video playback while the tunnel is traversed.

To make such anticipatory resource allocation possible, the upcoming channel states may have to be predicted. Embodiments may perform a prediction from the perspective of trajectory prediction. This means that, once the trajectory of a user may have been predicted with high accuracy, it might be assumed that the channel state (e.g., RSSI or path loss) might be established by other means, e.g. to look up the channel state at a predicted position in a coverage map. Such data is may be available either in an operator's data base.

Two main categories of existing approaches to predict the trajectory of moving users might be identified. One category may be based on the information sampled from individual vehicles. The second category of trajectory prediction might be based on the patterns measured outside vehicles (e.g. traffic monitors, base stations).

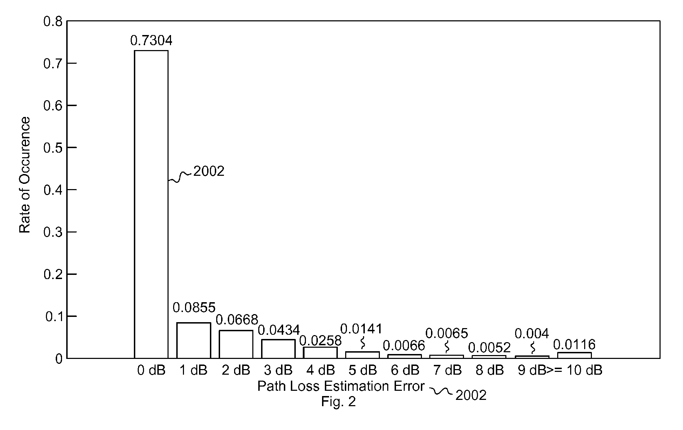

Path loss prediction might be used to predict the trajectory of a vehicle, based on the maximum speed of the road. This approach might be unreliable in cases where the speed of the user cannot correctly be mapped into the path loss of the road, as shown by the path loss estimation error 2002 in Fig. 2. The low accuracy may result from its assumption of a constant user speed between the intersections. This may be considered an important issue as the small offset in location prediction may result a considerable Mean Square Error (MSE) for path loss prediction. Fig. 2 shows the performance of a max-speed estimator in which the speed of vehicles is assumed constant and equal to the maximum speed allowed in the road. In addition, the trajectory prediction at intersections might be completely disregarded with this approach.

A vehicle's future location and speed might also be predicted from its historical data, using Kalman filters. In that model, sampled locations and sampled speeds may be regarded as the observation sequence and the state sequence, respectively. However, Kalman filters may be considered linear filters, which might not be accurate in prediction, as the vehicle's trajectory may evolve non-linearly.

A vehicle's future trajectory might also be predicted based on its historical data using a linear regression method. Again, a linear method might not be reliable in practice due to the inherent non-stationarity of trajectories.

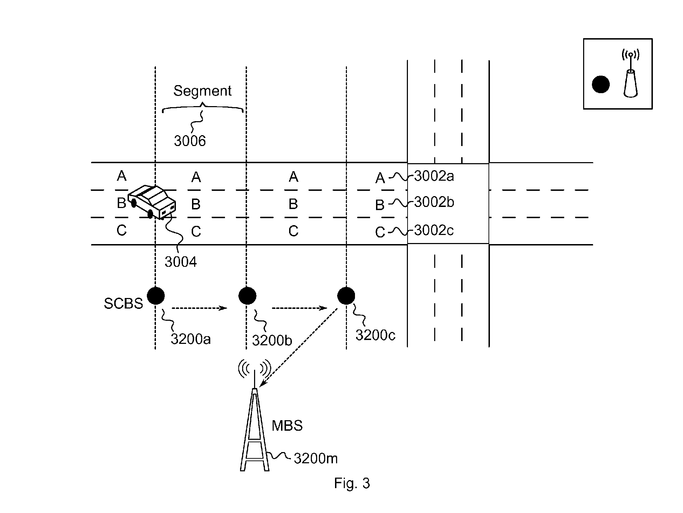

Embodiments may predict the trajectory of the moving wireless user, using the signaling between the user and a number of Small Cell Base Stations (SCBSs). Embodiments might make use of the following approach: Assuming that the users follow driving regulations, the direction the user will take at the intersection might be predicted based on the user's lane in the current street section. That is, users that have chosen a left or right lane before reaching the intersection might be predicted to turn left or right, respectively. Users on the central lane might be assumed to continue in a straight line. Fig. 3 illustrates the approach used in various embodiments.

Throughout the communication between the user and the SCBSs, the approach may update the current speed and the location of the user within certain intervals. Embodiments might then incorporate such information to 1) anticipate path loss of the road, 2) predict the next direction of the user at the intersection, and 3) perform the adaptive resource allocation.

Fig. 3 illustrates a diagram of an embodiment comprising a mobile transceiver 3004, shown as a vehicle, on a road comprising three lanes *A* 3002a, *B* 3002b and C 3002c. Fig. 2 further comprises three small cell base stations 3200a, 3200b and 3200c located at the side of the road and a macro cell base station 3200m. The space between two SCBSs is denoted a Segment 3006. The figure may illustrate a mobile transceiver 3004 driving in a road that approaches an intersection. Without loss of generality, it is assumed that the road may have three lanes 3002a, 3002b and 3002c. Moreover, on the road side, there may be a number of SCBSs 3200a, 3200b and 3200c which communicate with the mobile transceiver, one another, and the Macro cell Base Station (MBS) 3200m. The SCBSs are shown by circles and might be installed on the lamp-stands beside the road. Embodiments may profit from SCBSs but might not necessarily depend on them. Embodiments without SCBS and only based on MBS may be possible. Each segment 3006 of the road might be defined as each part of the road between two SCBSs, divided into three lanes. Upon the arrival of the mobile transceiver 3004 to the intersection, the user may pass a series of segments in the road. For example, [*C, C, C,* C] may mean the mobile transceiver 3004 has used lane C 3002c, or [*B, B, A, A*] may mean the mobile transceiver 3004 was in lane *B* 3002b, then changed to lane *A* 3002a. Having such trajectory, the direction of the user might be predicted.

A vehicle may follow the driving regulations which may hold for most users. For example, if the mobile transceiver 3004 has trajectory [*B, B, B, B*], it may mean the mobile transceiver 3004 might continue on lane *B* 3002b. Moreover, trajectory [*B, B, C, C*] might be interpreted as a high probability that the mobile transceiver 3004may turn right. A mobile transceiver 3004 in lane *C* 3002c at the last segment may be unlikely to turn left, as it might not be rational, even if might be possible.

The current lane of a mobile transceiver 3004might, in embodiments, be estimated per segment through arbitrary available localization techniques, for example through the direct use of the user's location information (i.e., GPS positions signaled from the UE to the network) or through localization techniques based on received signal strength or time-of-flight.

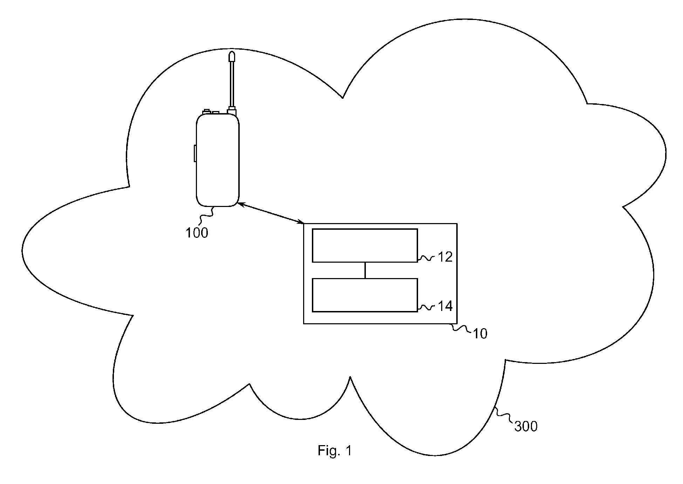

In the following, some embodiments for apparatuses, a mobile transceiver, a base station, methods and computer programs for providing information related to a predicted channel state of a mobile transceiver will be described. Fig. 1 illustrates a block diagram of an embodiment of an apparatus 10, comprising a location module 12 and a control module 14. Fig. 1 further illustrates a mobile transceiver 100 comprised in a mobile communication system 300. The apparatus 10 is coupled to the mobile transceiver 100, and the location module 12 is coupled to the control module 14.

The apparatus 10 is configured to provide information related to a predicted channel state of a mobile transceiver 100 of a mobile communication system 300.

In some embodiments, a predicted channel state may correspond to at least one element of the group of a receive signal power, an Radio Signal Strength Indication (RSSI), an RSSI region or interval, an Signal-to-Noise-Ratio (SNR), a Signal-to-Interference-Ratio (SIR), a Signal-to-Interference-and-Noise-Ratio (SINR), a supported constellation size of the signal modulation, a supported rate of the forward error correction, a supported data rate, or a network or transmission mode.

In some embodiments, a better predicted channel state may correspond to a channel state supporting data transmission at a higher rate than in a channel state corresponding to a worse predicted channel state. This may be due to physical properties of a channel, such as, for example, signal receiver power or signal-to-noise ratio, or due to the availability of different modulations, protocols or technologies, such as Long Term Evolution (LTE) or Universal Mobile Telecommunication System (UMTS).

In general, the mobile communication system may, for example, correspond to one of the Third Generation Partnership Project (3GPP)-standardized mobile communication networks, where the term mobile communication system is used synonymously to mobile communication network. The mobile or wireless communication system may correspond to, for example, a 5th Generation system (5G), a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

Mobile communication systems may comprise one or more base station transceivers and one or more mobile transceivers. A base station transceiver can be operable to communicate with one or more active mobile transceivers and a base station transceiver can be located in or adjacent to a coverage area of another base station transceiver, e.g. a macro cell base station transceiver or small cell base station transceiver. Hence, embodiments may provide a mobile communication system comprising one or more mobile transceivers and one or more base station transceivers, wherein the base station transceivers may establish macro cells or small cells, as e.g. pico-, metro-, or femto cells. A mobile transceiver may correspond to a smartphone, a cell phone, user equipment, radio equipment, a mobile, a mobile station, a laptop, a notebook, a personal computer, a Personal Digital Assistant (PDA), a portable media player, a portable television, a Universal Serial Bus (USB) -stick, a car, a mobile relay transceiver for D2D communication, etc. A mobile transceiver may also be referred to as User Equipment (UE) or mobile in line with the 3GPP terminology.

A base station transceiver can be located in the fixed or stationary part of the network or system. A base station transceiver may correspond to a remote radio head, a transmission point, an access point, radio equipment, a macro cell, a small cell, a micro cell, a femto cell, a metro cell etc. A base station transceiver may correspond to a base station understood as a logical concept of a node/entity terminating a radio bearer or connectivity over the air interface between a terminal/mobile transceiver and a radio access network. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a Base Transceiver Station (BTS), an access point, a remote radio head, a transmission point, a relay transceiver etc., which may be further subdivided in a remote unit and a central unit.

A mobile transceiver can be associated, camped on, or registered with a base station transceiver or cell. The term cell refers to a coverage area of radio services provided by a base station transceiver, e.g. a NodeB (NB), an eNodeB (eNB), a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sector antennas. In the following a cell may represent an according base station transceiver generating the cell or, likewise, a base station transceiver may represent a cell the base station transceiver generates.

The apparatus comprises a location module 12 to obtain information related to a location of the mobile transceiver 100. In some embodiments, the location module 12 may be configured to provide the information related to the location of the mobile transceiver 100 based on information related to Global Positioning System (GPS) coordinates of the mobile transceiver 100. The location module 12 might further be configured to provide the information related to the location of the mobile transceiver 100 based on information related to at least one element of the group of a Wireless Fidelity (WiFi), Worldwide Interoperability for Microwave Access (WiMAX), Millimeter Wave, Access Points location database, a database of base station locations, a database of Cell IDentifications (CIDs), fingerprinting based on radio maps and Received Signal Strength Indication (RSSI), triangulation or trilateration of cellular base stations using Time Difference Of Arrival (TDOA), or RSSI-based estimates using reference beacon signals from 802.11 or Bluetooth devices.

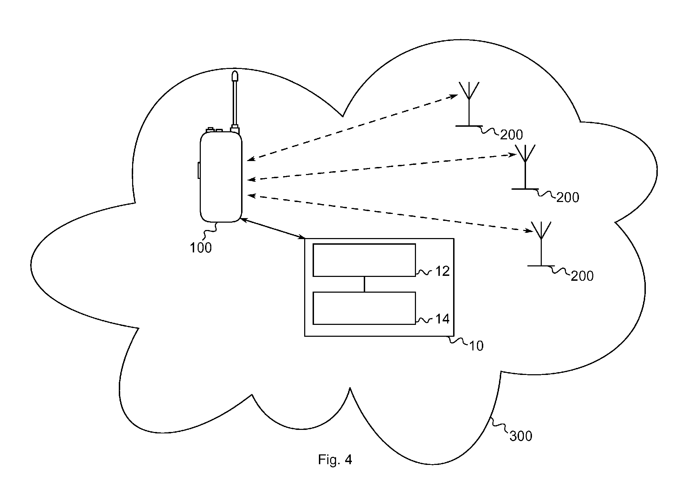

Fig. 4 illustrates a block diagram of an embodiment of the apparatus 10 for a mobile transceiver 100 in a mobile communication system 300, wherein the mobile communication system further comprises one or more base station transceivers 200, which may further also be referred to as one or more base stations 200. The mobile transceiver 100 is coupled to the apparatus 10, and the location module 12 is coupled to the control module 14. In some embodiments, the mobile communication system 300 may further comprise one or more base station transceivers 200, and the location module 12 may be configured to provide the information related to the location of the mobile transceiver 100 based on information related to a relative distance between the mobile transceiver 100 and the one or more base station transceivers 200.

In some embodiments, the information related to the relative distance between the mobile transceiver 100 and the one or more base station transceivers 200 may also be based on information related to Received Signal Strength Indications, RSSI, of one or more signals of the one or more base station transceivers 200 at the mobile transceiver 100. In various embodiments the information related to the location of the mobile transceiver 100 may also be based on a triangulation of the position of the mobile transceiver 100 based on the information related to a relative distance between the mobile transceiver 100 and at least three base station transceivers 200, as Fig. 4 further illustrates. In some embodiments, the one or more base station transceivers 200 may correspond to macro cell base station transceivers and/or small cell base station transceivers as described above.

The apparatus further comprises a control module 14 to determine information related to a predicted trajectory of the mobile transceiver 100 based on the information related to the location of the mobile transceiver 100, and to provide the information related to the predicted channel state based on the information related to the predicted trajectory of the mobile transceiver 100. In embodiments the control module 14, may be implemented using one or more processing units, one or more processing devices, any means for processing, such as a processor, a computer or a programmable hardware component being operable with accordingly adapted software. In other words, the described functions of the control module 14 may as well be implemented in software, which is then executed on one or more programmable hardware components. Such hardware components may comprise a general purpose processor, a Digital Signal Processor (DSP), a micro-controller, etc.

In some embodiments, the predicted trajectory of the mobile transceiver 100 may be based on information related to a position of the mobile transceiver 100 relative to a fixed traffic object. A fixed traffic object may, in embodiments, correspond to a street, lanes of a street, lane markers, waterway markers, an intersection, a toll booth, traffic lights, a traffic island, a tunnel, a bridge, railroad/tram/subway tracks and platforms etc.

The predicted trajectory of the mobile transceiver 100 may further be based on a limited set of possible trajectories. Possible trajectories may, in embodiments, correspond to lanes on a street, routes at an intersection, channels in a waterway, tracks in a railroad/tram/subway system etc.

In some embodiments, the information related to the predicted channel state at the mobile transceiver 100 may be based on information related to a mapping between a location and/or a predicted trajectory and a predicted channel state. In embodiments, the predicted channel state may also be based on information related to a possible shadowing of radio signals at a location, distances to base station transceivers, average network traffic load at a location, a receive signal power, an RSSI, an RSSI region or interval, an SNR, a SIR, a SINR, a supported constellation size of the signal modulation, a supported rate of the forward error correction, a supported data rate, or a network or transmission mode

In some embodiments, the location module 12 may be configured to obtain the information related to the location of the one or more mobile transceivers 100 from a base station transceiver. In some embodiments, the information related to the location of the one or more mobile transceivers 100 may comprise information related to a former trajectory of the one or more mobile transceivers 100.

In embodiments, the prediction of the channel state at a mobile transceiver 100 might be modeled as a classification decision. The classification may require a classifier that maps the input data into a set of discrete classes. Specifically, given a set of training examples, each of which may be marked as belonging to one from multiple categories, the classifier might, in embodiments, use a training algorithm that may build a model that assigns the new input into a category. Support vector machine (SVM) might be an example of a classifier that may aim to increase the distance between two points of each two classes that are nearest to the decision border.

In embodiments, the upcoming directions might be modeled as a set of different classes that the user may have to choose from. Moreover, the trajectory vector might be treated as the input data, and the class that the user is mapped to may be the output of our proposed trajectory prediction approach. In embodiments, the apparatus may apply the classification based on the input data provided by SCBSs (trajectory information of the user's path) to predict the next direction of the user.

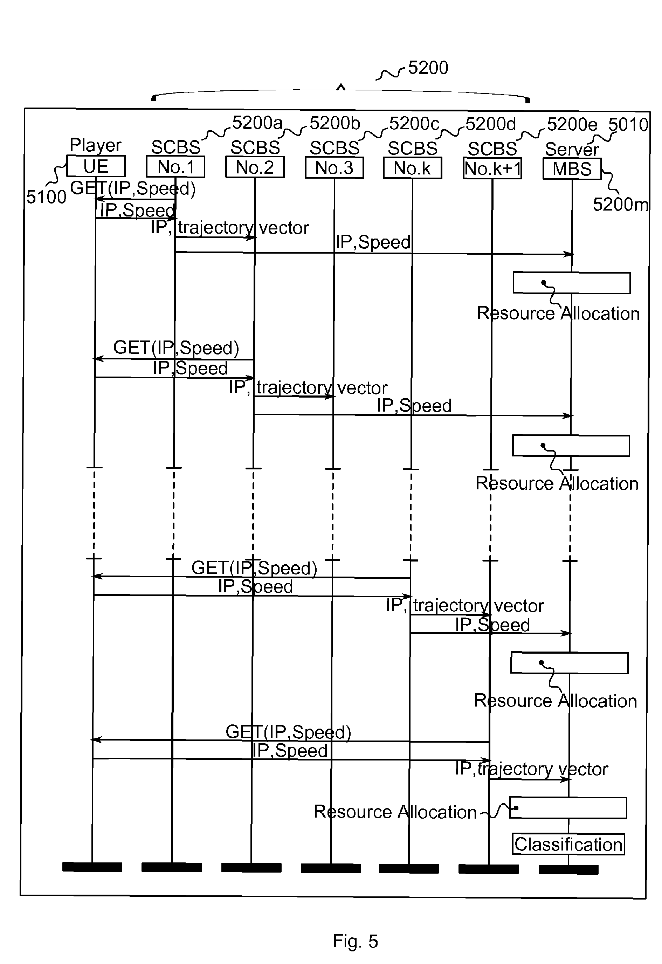

Fig. 5 illustrates a sequence diagram of an embodiment of a protocol cycle for trajectory prediction along with adaptive resource allocation. Before the sequence starts, each user equipment 5100, which may correspond to the mobile transceiver 100, may be assigned an Internet Protocol (IP) address, which might not necessarily be global. Fig. 5 further illustrates a number of Small Cell Base Stations (SCBS) 5200, 5200a, 5200b, 5200c, 5200d, and 5200e, of which 5200e may be closest to an intersection, and one or more macro cell base stations 5200m comprising the apparatus 5010, which may correspond to the apparatus 10. The SCBSs and the one or more macro cell base stations may correspond to the one or more base station transceivers 200. In embodiments, each SCBS 5200 may be coupled to the subsequent SCBS, and to the one or more macro cell base stations 5200m

When crossing an SCBS 5200, which may correspond to the one or more base station transceivers 200, the user equipment 5100 may send it's velocity to the SCBS 5200a through a reference signal (with pre-determined power). This may help to locate the current lane that the user equipment 5100 is located at. As the location of the SCBSs may be fixed, the user equipment 5100 and the SCBS 5200a may be in line of sight of each other, and the distance may be short, the distance might, in embodiments, be derived from the received signal strength indication (RSSI). In embodiments, the user equipment may also use a localization system like, in embodiments, GPS. Embodiments may also derive the location through the cooperation of multiple macro cell base stations 5200m. However, the latter may require fine synchronization among macro cell base stations 5200m, which may be costly.

In embodiments, the SCBS 5200a may send the user equipment's 5100 IP address along with the user equipment's 5100 trajectory to the next SCBS 5200b. In addition, the SCBS 5200 may send the user IP address and the user equipment's 5100 velocity to the macro cell base station 5200m. This may continue, which for example the SCBS 5200b providing information for the SCBS 5200c and the macro cell base station 5200m, until the last SCBS 5200e (nearest to the intersection). In embodiments, the MBS might update the speed information at every segment. Therefore, the resource allocation might be adaptively updated based on a predicted path loss of the next segment.

In embodiments, the SCBS 5200e closest to the intersection may send the trajectory information of the user equipment 5100 (for example the [*C, C, B, B*] vector described above), and the velocity of the user equipment 5100 to the macro cell base station 5200m.

In some embodiments, the resource allocation and serving the moving users may be performed by a macro cell base station 5200m, while possibly offloading stationary user equipment to small cells. In some embodiments, the resource allocation might be performed directly at small cells 5200. Then, no communication between SCBSs 5200 and the one or more macro cell base stations 5200m might be required and the classification might be done at last SCBS.

In various embodiments, the user equipment's 5100 lane per street segment might be determined entirely without SCBSs. To do so, localization techniques known from Macrocell deployments such as time-division of arrival (TDOA) or, for example, the user's local GPS position might be used.

In some embodiments, SCBSs 5200 might not need to store any data. The algorithm may be performed completely online. That is, to predict the trajectory of the user at an intersection, no information from the history of driving or data from previous routs may be needed. Moreover, the algorithm might not directly depend on the map, which may be unlike some approaches that may rely on shortest path, or which may assign weights to the next directions and may perform reverse optimization.

In embodiments, the SCBSs 5200 might only need two channels to communicate with one another. They might reuse the same resource block every two hops. In some embodiments, each SCBS 5200 might communicate only with the next SCBS and the one or more macro cell base stations 5200m.

In various embodiments, the predicted channel state might be used with a predictive approach for content buffering, such as Content Aware Resource Allocation (CARA), for example in video streaming. In embodiments, trajectory prediction might not have to be sent at every intersection, but only at intersections, for which the path loss of the next roads may be highly uncorrelated.

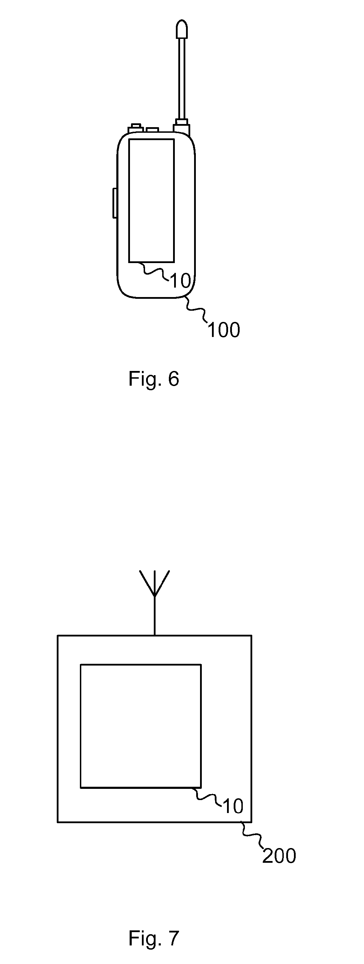

Fig. 6 illustrates a block diagram of an embodiment of a mobile transceiver 100 comprising the apparatus 10. Fig. 7 illustrates a block diagram of an embodiment of a base station transceiver 200 comprising the apparatus 10.

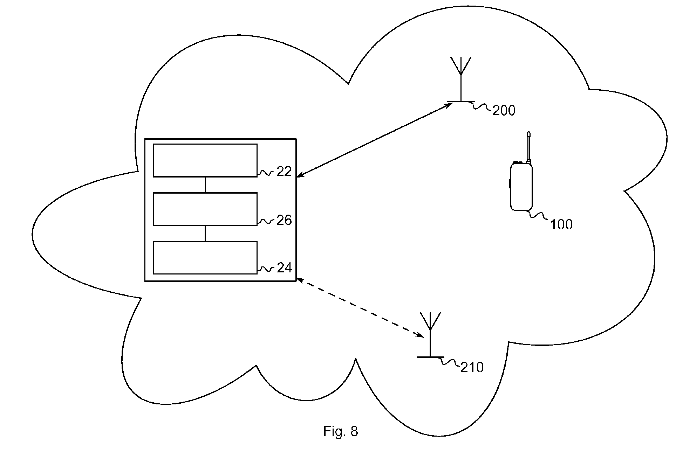

Fig. 8 illustrates a block diagram of an embodiment of an apparatus 20 for a base station transceiver 200 of a mobile communication system 300 comprising one or more mobile transceivers 100. The apparatus 20 comprises an input 22 to obtain information related to a location of the one or more mobile transceivers 100 and an output 24 to provide information related to a trajectory of the one or more mobile transceivers 100. The apparatus 20 further comprises a control module 26 to determine the information related to the trajectory of the one or more mobile transceivers 100, based on the information related to the location of the one or more mobile transceivers 100. As Fig. 8 further illustrates, the apparatus 20 is coupled to the mobile transceiver 200, and may be coupled to another base station transceiver 210. The input 22 and output 24 are coupled to the control module 26. In embodiments, the base station transceiver 200, and/or the base station transceiver 210, may comprise the apparatus 20.

In embodiments, the mobile communication system 300 may further comprise another base station 210, as further shown in Fig. 8. In various embodiments, the control module 26 may further be configured to provide the information to the other base station transceiver 210 using the output 24. The control module 26 may further be configured to obtain information related to a prior trajectory from the other base station transceiver 210 using the input 22.

Embodiments may also provide the mobile communication system 300 comprising one or more mobile transceivers 100 comprising the apparatus 10, and one or more base station transceivers 200 comprising the apparatus 20. Embodiments may further provide the mobile communication system 300 comprising one or more base station transceivers 200, comprising the apparatus 10 and/or comprising the apparatus 20.

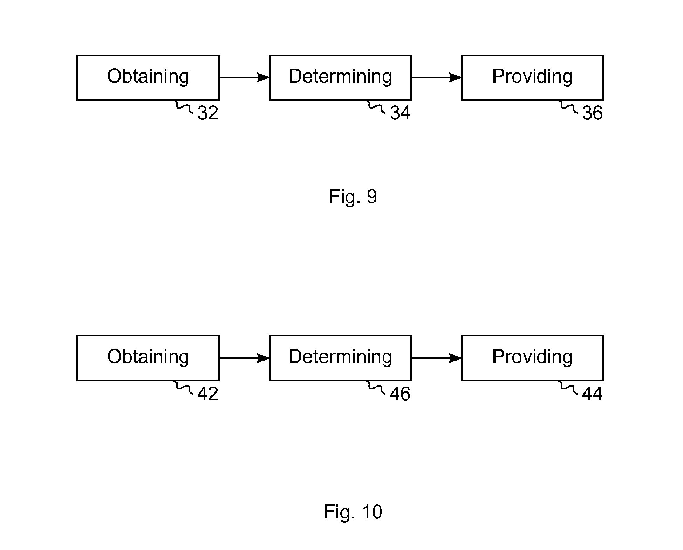

Fig. 9 shows a block diagram of a flow chart of a method for providing information related to a predicted channel state of a mobile transceiver 100 of a mobile communication system 300. The method comprises obtaining 32 information related to a location of the mobile transceiver 100 and determining 34 information related to a predicted trajectory of the mobile transceiver 100 based on the information related to the location of the mobile transceiver 100. The method further comprises providing 36 the information related to the predicted channel state based on the information related to the predicted trajectory of the mobile transceiver 100.

Fig. 10 shows a block diagram of a flow chart of a method for a base station transceiver 200 of a mobile communication system 300 comprising one or more mobile transceivers 100. The method comprises obtaining 42 information related to a location of the one or more mobile transceivers 100 and providing 44 information related to a trajectory of the one or more mobile transceivers 100. The method further comprises determining 46 the information related to the trajectory of the one or more mobile transceivers 100, based on the information related to the location of the one or more mobile transceivers 100.

Some embodiments comprise a digital control circuit installed within the apparatus for performing the method. Such a digital control circuit, e.g. a Digital Signal Processor (DSP), needs to be programmed accordingly. Hence, yet further embodiments also provide a computer program having a program code for performing embodiments of at least one of the above methods, when the computer program is executed on a computer, a digital processor, or a programmable hardware component. A further embodiment is a computer readable storage medium storing instructions which, when executed by a computer, processor, or programmable hardware component, cause the computer to implement one of the methods described herein.

Embodiments may provide a relatively reliable prediction, as embodiments might not depend on subjective information about the driver, e.g., its previous trajectory, or calendar entries to indicate if the driver is late. Furthermore, embodiments may be independent of the type of the user device, the number of lanes in the road, or the car.

When implementing embodiments comprising SCBSs, a relatively low communication overhead may be introduced by keeping the relevant information local. Macro cell base stations might not need to communicate with one another, e.g., handover the trajectory information. Moreover, a cooperation among SCBSs may be limited to SCBSs located in a limited geographical area.

Embodiments may predict the channel state of a mobile transceiver 100 in real time, and might not require to build a large database on user trajectories. In embodiments, SCBSs might not need to store any information and might remove the data of each mobile transceiver 100 that is already passed. Consequently, mobile transceiver might preserve the mobile transceiver user's privacy and may make security incidents impossible.

Embodiments may also update its estimate at every street segment. This may allow a more precise mapping of a user to a coverage map. Consequently, an estimation may be designed to the specifics of coverage map-based channel state estimation, which may make embodiments more accurate and easier to use with existing maps than other approaches.

In embodiments, a further benefit of the segment-based estimation may be that predictions may be updated at a fixed frequency. Embodiments might thus be suited for RAN and network optimization algorithms that may perform a periodic adaptation per constant time interval.

Embodiments may rely on robust assumptions on traffic regulations, network infrastructure, and the position of an intersection. These assumptions may work with arbitrary maps in many cities. Embodiments may offer a relatively high prediction accuracy at a relatively low overhead. The prediction may be relatively robust in time and space.

A person of skill in the art would readily recognize that steps of various above-described methods can be performed by programmed computers. Herein, some embodiments are also intended to cover program storage devices, e.g., digital data storage media, which are ma-chine or computer readable and encode machine-executable or computer-executable pro-grams of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for controlling", "means for transmitting", "means for receiving", "means for transceiving", "means for locating", etc., may be provided through the use of dedicated hardware, such as "a controller", "a transmitter", "a receiver", "a transceiver", "a locator", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

## Claims

1. An apparatus (10) for providing information related to a predicted channel state of a mobile transceiver (100) of a mobile communication system (300), the apparatus comprising
a location module (12) to obtain information related to a location of the mobile transceiver (100); and
a control module (14) to determine information related to a predicted trajectory of the mobile transceiver (100) based on the information related to the location of the mobile transceiver (100), and to provide the information related to the predicted channel state based on the information related to the predicted trajectory of the mobile transceiver (100).

2. The apparatus (10) of claim 1, wherein the location module (12) is configured to provide the information related to the location of the mobile transceiver (100) based on information related to Global Positioning System, GPS, coordinates of the mobile transceiver (100), and/or wherein the mobile communication system (300) further comprises one or more base station transceivers (200), and wherein the location module (12) is configured to provide the information related to the location of the mobile transceiver (100) based on information related to a relative distance between the mobile transceiver (100) and the one or more base station transceivers (200).

3. The apparatus (10) of claim 2, wherein the information related to the relative distance between the mobile transceiver (100) and the one or more base station transceivers (200) is based on information related to Received Signal Strength Indications, RSSI, of one or more signals of the one or more base station transceivers (200) at the mobile transceiver (100).

4. The apparatus (10) of claim 2, wherein the information related to the location of the mobile transceiver (100) is based on a triangulation of the position of the mobile transceiver (100) based on the information related to a relative distance between the mobile transceiver (100) and at least three base station transceivers (200).

5. The apparatus (10) of claim 2, wherein the one or more base station transceivers (200) correspond to macro cell base station transceivers and/or small cell base station transceivers.

6. The apparatus (10) of claim 1, wherein the predicted trajectory of the mobile transceiver (100) is based on information related to a position of the mobile transceiver (100) relative to a fixed traffic object, and/or wherein the predicted trajectory of the mobile transceiver (100) is based on a limited set of possible trajectories.

7. The apparatus (10) of claim 1, wherein the information related to the predicted channel state at the mobile transceiver (100) is based on information related to a mapping between a location and/or a predicted trajectory and a predicted channel state.

8. The apparatus (10) of claim 1, wherein the location module (12) is configured to obtain the information related to the location of the one or more mobile transceivers (100) from a base station transceiver, and/or wherein the information related to the location of the one or more mobile transceivers (100) comprises information related to a former trajectory of the one or more mobile transceivers (100).

9. A mobile transceiver (100) comprising the apparatus (10) of claim 1.

10. A base station transceiver (200) comprising the apparatus (10) of claim 1.

11. An apparatus (20) for a base station transceiver (200) of a mobile communication system (300) comprising one or more mobile transceivers (100), the apparatus (20) comprising
an input (22) to obtain information related to a location of the one or more mobile transceivers (100);
an output (24) to provide information related to a trajectory of the one or more mobile transceivers (100); and
a control module (26) to determine the information related to the trajectory of the one or more mobile transceivers (100), based on the information related to the location of the one or more mobile transceivers (100).

12. The apparatus (20) of claim 11, wherein the mobile communication system (300) further comprises another base station (210), and wherein the control module (26) is further configured to provide the information to the other base station transceiver (210) using the output (24), and/or wherein the control module (26) is further configured to obtain information related to a prior trajectory from the other base station transceiver (210) using the input (22).

13. A method for providing information related to a predicted channel state of a mobile transceiver (100) of a mobile communication system (300), the method comprising obtaining (32) information related to a location of the mobile transceiver (100); determining (34) information related to a predicted trajectory of the mobile transceiver (100) based on the information related to the location of the mobile transceiver (100); and providing (36) the information related to the predicted channel state based on the information related to the predicted trajectory of the mobile transceiver (100).

14. A method for a base station transceiver (200) of a mobile communication system (300) comprising one or more mobile transceivers (100), the method comprising obtaining (42) information related to a location of the one or more mobile transceiver (100);
providing (44) information related to a trajectory of the one or more mobile transceivers (100); and
determining (46) the information related to the trajectory of the one or more mobile transceivers (100), based on the information related to the location of the one or more mobile transceivers (100).

15. A computer program having a program code for performing at least one of the methods of claim 13 and 14, when the computer program is executed on a computer, a processor, or a programmable hardware component.

## Amended claims

### Amended claims in accordance with Rule 137(2) EPC.

1. An apparatus (10) for providing information related to a predicted channel state of a mobile transceiver (100) of a mobile communication system (300), the apparatus comprising
a location module (12) to obtain information related to a location of the mobile transceiver (100); and
a control module (14) to determine information related to a predicted trajectory of the mobile transceiver (100) based on the information related to the location of the mobile transceiver (100), and based on driving regulations and/or on traffic regulations, and to provide the information related to the predicted channel state based on the information related to the predicted trajectory of the mobile transceiver (100).

2. The apparatus (10) of claim 1, wherein the location module (12) is configured to provide the information related to the location of the mobile transceiver (100) based on information related to Global Positioning System, GPS, coordinates of the mobile transceiver (100), and/or wherein the mobile communication system (300) further comprises one or more base station transceivers (200), and wherein the location module (12) is configured to provide the information related to the location of the mobile transceiver (100) based on information related to a relative distance between the mobile transceiver (100) and the one or more base station transceivers (200).

3. The apparatus (10) of claim 2, wherein the information related to the relative distance between the mobile transceiver (100) and the one or more base station transceivers (200) is based on information related to Received Signal Strength Indications, RSSI, of one or more signals of the one or more base station transceivers (200) at the mobile transceiver (100).

4. The apparatus (10) of claim 2, wherein the information related to the location of the mobile transceiver (100) is based on a triangulation of the position of the mobile transceiver (100) based on the information related to a relative distance between the mobile transceiver (100) and at least three base station transceivers (200).

5. The apparatus (10) of claim 2, wherein the one or more base station transceivers (200) correspond to macro cell base station transceivers and/or small cell base station transceivers.

6. The apparatus (10) of claim 1, wherein the predicted trajectory of the mobile transceiver (100) is based on information related to a position of the mobile transceiver (100) relative to a fixed traffic object, and/or wherein the predicted trajectory of the mobile transceiver (100) is based on a limited set of possible trajectories.

7. The apparatus (10) of claim 1, wherein the information related to the predicted channel state at the mobile transceiver (100) is based on information related to a mapping between a location and/or a predicted trajectory and a predicted channel state.

8. The apparatus (10) of claim 1, wherein the location module (12) is configured to obtain the information related to the location of the one or more mobile transceivers (100) from a base station transceiver, and/or wherein the information related to the location of the one or more mobile transceivers (100) comprises information related to a former trajectory of the one or more mobile transceivers (100).

9. A mobile transceiver (100) comprising the apparatus (10) of claim 1.

10. A base station transceiver (200) comprising the apparatus (10) of claim 1.

11. An apparatus (20) for a base station transceiver (200) of a mobile communication system (300) comprising one or more mobile transceivers (100), the apparatus (20) comprising
an input (22) to obtain information related to a location, and based on driving regulations and/or on traffic regulations of the one or more mobile transceivers (100);
an output (24) to provide information related to a trajectory of the one or more mobile transceivers (100); and
a control module (26) to determine the information related to the trajectory of the one or more mobile transceivers (100), based on the information related to the location of the one or more mobile transceivers (100).

12. The apparatus (20) of claim 11, wherein the mobile communication system (300) further comprises another base station (210), and wherein the control module (26) is further configured to provide the information to the other base station transceiver (210) using the output (24), and/or wherein the control module (26) is further configured to obtain information related to a prior trajectory from the other base station transceiver (210) using the input (22).

13. A method for providing information related to a predicted channel state of a mobile transceiver (100) of a mobile communication system (300), the method comprising obtaining (32) information related to a location, and based on driving regulations and/or on traffic regulations of the mobile transceiver (100);
determining (34) information related to a predicted trajectory of the mobile transceiver (100) based on the information related to the location of the mobile transceiver (100); and providing (36) the information related to the predicted channel state based on the information related to the predicted trajectory of the mobile transceiver (100).

14. A method for a base station transceiver (200) of a mobile communication system (300) comprising one or more mobile transceivers (100), the method comprising obtaining (42) information related to a location, and based on driving regulations and/or on traffic regulations of the one or more mobile transceiver (100);
providing (44) information related to a trajectory of the one or more mobile transceivers (100); and
determining (46) the information related to the trajectory of the one or more mobile transceivers (100), based on the information related to the location of the one or more mobile transceivers (100).

15. A computer program having a program code for performing at least one of the methods of claim 13 and 14, when the computer program is executed on a computer, a processor, or a programmable hardware component.
